# EUROPÄISCHE PATENTSCHRIFT

(11) **EP 3 259 537 B1**
(45) Veröffentlichungstag und Bekanntmachung des Hinweises auf die Patenterteilung: **26.09.2018**
(21) Anmeldenummer: 17710466.8
(22) Anmeldetag: 14.01.2017
(51) Int. Cl.: F24F 13/28, F24F 3/16, F24F 7/00, F24F 12/00

(54) **FILTERANORDNUNG FÜR LUFTTECHNISCHE ANLAGEN, DEZENTRALE WOHNRAUMBELÜFTUNGSANLAGE MIT EINER DERARTIGEN FILTERANORDNUNG SOWIE RAUMBELÜFTUNGSEINHEIT**
FILTER ARRANGEMENT FOR VENTILATION DEVICE, DECENTRAL VENTILATION SYSTEM WITH FILTER ARRANGEMENT AND ROOM VENTILATION UNIT
ARRANGEMENT DE FILTRE, SYSTÈME DE VENTILATION DÉCENTRAL AVEC LEDITE ARRANGEMENT DE FILTRE ET APPAREIL DE VENTILATION POUR UN LOCAL

(30) Priorität: 14.01.2016 DE 102016100551
(43) Veröffentlichungstag der Anmeldung: 27.12.2017
(73) Patentinhaber: Schmitz, Oliver, 41066 Mönchengladbach (DE)
(72) Erfinder: Schmitz, Oliver, 41066 Mönchengladbach (DE)
(74) Vertreter: Bonsmann, Joachim Bernhard
(86) Internationale Anmeldenummer: PCT/DE2017/100020
(87) Internationale Veröffentlichungsnummer: WO 2017/121429

(56) Entgegenhaltungen:
- WO-A1-2004/106812
- DE-U1-202012 103 631
- US-A- 5 165 466

## Beschreibung

Die vorliegende Erfindung betrifft eine Filteranordnung für eine lufttechnische Anlage, insbesondere für eine dezentrale Wohnraumbelüftungsanlage, eine dezentrale Wohnraumbelüftungsanlage mit einer derartigen Filteranordnung sowie eine Raumbelüftungseinheit, insbesondere für dezentrale Wohnraumbelüftungsanlagen.

Kontrollierte Wohnraumbelüftungssysteme stellen eine Schlüsselkomponente für den reibungslosen Betrieb energiesparend und weitgehend luftdicht ausgestalteter Gebäude dar. Durch den Einsatz kontrollierter Wohnraumbelüftungssysteme kann die Wohnraumluftqualität aufrechterhalten werden, wobei die im Falle natürlicher Lüftung über Fenster ansonsten auftretenden Wärmeverluste minimiert werden. Hierdurch wird auch die Luftfeuchtigkeit auf einem kontrollierten Niveau gehalten, so dass Schimmelbildung und sonstige feuchtigkeitsbedingte Bauschäden vermieden werden

Der Begriff "Wohnraum" soll in diesem Zusammenhang verdeutlichen, dass die Luftqualität für den Aufenthalt von Personen verbessert werden soll. Derartige Systeme können beispielsweise auch für Büroräume eingesetzt werden, so dass der Begriff "Wohnraumbelüftungssystem" keine Einschränkung auf den Einsatz im Wohnungsbau bedeuten soll.

Im Markt wird zwischen zentralen und dezentralen Wohnraumbelüftungssystemen unterschieden.

Dezentrale Belüftungssysteme erreichen in letzter Zeit im Bereich des Wohnungsbaus eine zunehmend stärkere Verbreitung im Vergleich zu zentralen Wohnraumbelüftungssystemen. Dies liegt zum einen an einem tendenziell geringeren Erstellungsaufwand, der diese Systeme auch zum nachträglichen Einbau in Bestandsimmobilien prädestiniert. Ein wesentlicher Vorteil der dezentralen Systeme besteht ferner darin, dass auf lange, schwer oder gar nicht zugängliche Luftkanäle zu einem zentralen Wärmetauscher verzichtet werden kann. Dies stellt unter Wartungs- und Hygieneaspekten einen großen Vorteil dar.

Um Wärmeverluste zu minimieren, ist bei den vorstehend genannten dezentralen Wohnraumbelüftungssystemen in der Regel ein Wärmespeicher vorgesehen, der über einen reversierenden Betrieb des Lüftermittels im Entlüftungsbetrieb von warmer, nach außen geführter Innenluft aufgewärmt wird und dann bei umgekehrter Betriebsweise die einströmende, im Allgemeinen kühlere Außenluft vorwärmt. Damit werden bei bekannten Anlagen Wärmerückgewinnungsraten von >80% erzielt.

Ferner ist bei derartigen Wohnraumbelüftungsanlagen in Deutschland eine Filterung zumindest der in den Innenraum einströmenden Luft gesetzlich vorgeschrieben. Diese Filterung erfolgt üblicherweise mittels Filtermatten od. dgl.

In den letzten Jahren wurde erkannt, welch gravierende Auswirkungen in der Luft befindliche Partikel mit einem aerodynamischen Durchmesser von 10 µm oder weniger - der sog. Feinstaub - auf die menschliche Gesundheit haben können. Derartige Feinstaubpartikel gelangen beim Einatmen in die oberen Atemwege oder in die Lunge und ggf. von dort in die Blutbahn und können im Körper - abhängig von ihrer Form und ihrer Toxizität - schwere gesundheitliche Schäden anrichten. Das Umweltbundesamt geht in einer aktuellen Studie von jährlich durchschnittlich 47.000 vorzeitigen Todesfällen in Deutschland aufgrund von Feinstaubbelastung aus, z.B. durch akute Atemwegserkrankungen oder durch Lungenkrebs. Noch gravierender als in Deutschland stellt sich die Situation in vielen anderen großen Metropolen der Welt dar, insbesondere in Asien.

Konventionelle Filter, wie z.B. Filtermatten, sind hinsichtlich ihrer Filterleistung insbesondere bei kleineren Partikeln, wie Feinstäuben, nicht sehr leistungsfähig, jedenfalls dann nicht, wenn größere Druckverluste vermieden werden sollen. Außerdem sind derartige Filtermedien nicht einfach zu reinigen bzw. müssen regelmäßig erneuert werden. Unterbleibt dies, so stellt dies einerseits ein Hygieneproblem dar, andererseits steigen durch einen mit Partikeln "zugesetzten" Filter die Druckverluste an und die Effektivität der Anlage sinkt.

Eine Alternative zu konventionellen Filtern stellen mit Hochspannungen von einigen Kilovolt betriebene Elektroabscheider oder Elektrofilter (auch als Anordnungen für elektronische Staubabscheidung bekannt) dar. Hierbei werden die in der Luft vorhandenen Partikel durch elektrische Ladungen abgeschieden.

Für die Raumluftreinigung sind insbesondere zweistufige Elektroabscheider nach dem sog. Penney-Prinzip bekannt. Dabei werden die abzuscheidenden Partikel zunächst durch einen sog. Ionisator elektrisch aufgeladen. Dies erfolgt durch sog. Coronaentladungen mittels in der Regel positiv geladener dünner Coronadrähte, die zwischen negativ geladenen Platten angeordnet sind. Die Luft mit den geladenen Partikeln gelangt sodann in einen sog. Kollektor, der aus parallel zueinander angeordneten, jeweils gegensätzlich geladenen Platten besteht. Die geladenen Partikel schlagen sich auf den Platten (insbesondere den negativ geladenen Platten) nieder, so dass die Luft hinter den Platten weitgehend partikelfrei ist.

Elektroabscheider nach dem Penney-Prinzip arbeiten ozonarm und zuverlässig. Allerdings ist die Baulänge eines derartigen Elektroabscheiders nicht unerheblich, zum einen aufgrund des zweistufigen Aufbaus und zum anderen aufgrund der benötigten Mindeststrecke, die die Luft durch den Kollektor zurücklegen muss, damit eine Partikelabscheidung mit guter Ausbeute stattfinden kann.

Da eine typische dezentralen Raumbelüftungsanlage direkt in einem Wanddurchbruch angeordnet wird, ist die verfügbare Baulänge auf die verfügbare Wandstärke begrenzt, will man nicht ästhetisch und bautechnisch unpraktikable innen- oder außenseitige Aufbauten hinnehmen. Daher stellt es bereits bei konventionellen Wohnraumbelüftungsanlagen eine technische Herausforderung dar, die benötigten Komponenten, u.a. Lüfter, den konventionellen Filter, Wärmespeicher für die Wärmerückgewinnung etc., auf der verfügbaren Baulänge unterzubringen, insbesondere bei geringen Wandstärken, wie sie beispielsweise bei Bestandssanierungen vorgegeben sind.
Einen weiteren Aspekt bei Elektroabscheidern stellt der Energieverbrauch dar. Die Leistungsaufnahme typischer Elektroabscheider ist zwar nicht sehr hoch. Jedoch sind aufgrund der Wandlungsverluste in Hochspannungsnetzteilen sowie aufgrund der stetig fließenden Entladungsströme Leistungsaufnahmen von größenordnungsmäßig ca. 10 W bei Elektroabscheidern im Wohnraumbereich erforderlich. Bei kontinuierlichem Betrieb und angesichts des Umstandes, dass bei dezentralen Wohnraumbelüftungsanlagen in der Regel mehrere (mindestens zwei) Einheiten vorzusehen sind, sind diese Leistungsaufnahmen nicht zu vernachlässigen.
Aus der WO 2004/106 812 A1 ist ein Lüftungsgerät bekannt, bei dem zwei im Gegenstrom angeordnete Luftkanäle mit jeweils unidirektional betriebenen Lüftern für getrennte Zu- und Abluftführung vorgesehen sind, zwischen denen eine Wärmerückgewinnung mittels in jeweils beide Kanäle ragender rotierender Wärmespeicherelemente erfolgt. Dabei ist in einem Kanal endseitig eine Elektrofilterung vorgesehen. Die WO 2004/106 812 A1 offenbart dabei eine Filteranordnung gemäß dem Oberbegriff von Anspruch 1.
Aus der US 5 165 466 A ist ein modular aufgebauter Gegenstromwärmetauscher bekannt, bei dem zusätzliche konventionelle Filtereinheiten, z.B. Elektrofilter, vorgesehen sein können, wobei Aufbau und Positionierung derartiger Filter nicht näher beschrieben wird.

Die DE 20 2012 103 631 U1 offenbart eine Raumbelüftungseinheit mit einem Luftkanal zum Einbau in eine Außenwand eines Gebäudes, einem reversierbarem Lüftermittel und einem in dem Luftkanal angeordneten Wärmespeicherelement. Damit offenbart die DE 20 2012 103 631 U1 eine Raumbelüftungseinheit gemäß dem Oberbegriff von Anspruch 12.

Der vorliegenden Erfindung liegt dementsprechend die Aufgabe zugrunde, eine Filteranordnung und eine dezentrale Wohnraumbelüftungsanlage mit einer derartigen Filteranordnung sowie eine Raumbelüftungseinheit zu schaffen, die eine optimale Feinstaubfilterung bei kompakten Baugrößen und in energiesparender Weise ermöglichen.

Die Lösung der vorgenannten Aufgabe erfolgt mittels einer Filteranordnung mit den Merkmalen des Patentanspruches 1, mittels einer dezentralen Wohnraumbelüftungsanlage mit den Merkmalen des Patentanspruches 8 sowie mittels einer Raumbelüftungseinheit mit den Merkmalen des Patentanspruches 12.

Vorteilhafte Ausgestaltungen der Erfindung sind in den jeweiligen abhängigen Patentansprüchen erläutert.

Bei einer erfindungsgemäßen Filteranordnung für eine lufttechnische Anlage, insbesondere für eine dezentrale Wohnraumbelüftungsanlage, mit einem Luftkanal, der einen von dem zu reinigenden Luftstrom zwangsdurchströmten Elektroabscheider aufweist, der sich über einen vorgegebenen Abschnitt des Luftkanals erstreckt, ist vorgesehen, dass der vorgegebene Elektroabscheider-Abschnitt des Luftkanals zusätzlich mindestens ein von dem Luftstrom angeströmtes Wärmespeicherelement aufweist.

Die vorliegende Erfindung eignet sich besonders für dezentrale (Wohn-)Raumbelüftungsanlagen, kann aber auch für andere lufttechnische Anlagen eingesetzt werden, bei denen ein Filterbedarf bei gleichzeitiger Temperaturdifferenz zwischen den beiden Luftseiten besteht, beispielsweise auch bei zentralen Raumbelüftungsanlagen oder Fahrzeugklimatisierungssystemen, etc.

Gemäß einem Aspekt der Erfindung werden Elektroabscheider und Wärmespeicher kombiniert. Zwar weisen auch die Komponenten konventioneller Elektroabscheider naturgemäß eine gewisse inhärente Wärmespeicherfähigkeit auf. Diese allein reicht aber in der Regel bei weitem nicht aus, um eine ausreichende Wärmekapazität für die angestrebten Wärmerückgewinnungsraten im Bereich von 80 % bis 90 % zu realisieren. Erfindungsgemäß sollen zusätzliche Wärmespeicherelemente vorgesehen sein, deren Wärmespeicherfähigkeit deutlich über die inhärente Wärmespeicherfähigkeit der Elektroden eines Elektroabscheiders (bzw. der notwendigen Befestigungen etc.) hinausgeht.

Bevorzugt kann das wenigstens eine Wärmespeicherelement - im Gegensatz zu den Elektroden des Elektroabscheiders - aus einem elektrisch isolierenden oder elektrisch schlecht leitendem Material gefertigt sein.

Neben ausreichender spezifischer Wärmekapazität und ausreichender Wärmeaustauschkoeffizienten zwischen Wärmetauscher und Luftstrom ist für eine effektive Wärmerückgewinnung eine ausreichende Speichermasse erforderlich, die in der Regel nicht allein durch die notwendigen Komponenten des Elektroabscheiders bereitgestellt werden kann. Daher können in einer bevorzugten Ausführungsform die Wärmespeicherelemente eine Gesamtmasse aufweisen, die wenigstens so groß ist wie 50%, bevorzugt 100% der Masse der für den Elektroabscheider technisch notwendigen Komponenten ist.

Auf diese Weise soll erfindungsgemäß zumindest ein signifikanter, bevorzugt ein großer Teil der Wärmespeicherkapazität der Anordnung, typischerweise 5% bis 100%, besonders bevorzugt 25% bis 100%, durch die kombinierte Wärmespeicher/Filtereinheit bereitgestellt werden. Ggf. kann zusätzliche Wärmespeicherkapazität noch mittels separat vor oder hinter der Filteranordnung positionierter zusätzlicher dedizierter Wärmespeicher ergänzt werden; ebenso können noch zusätzliche Filter - wie z.B. konventionelle, auf Filtermatten beruhende Filter - eingesetzt werden.

Die in den Filter integrierte zusätzliche Wärmespeicherkapazität kann beispielsweise mittels zusätzlicher wärmespeichernder Elemente, die zwischen den Kondensatorplatten angeordnet sind, erzielt werden. Alternativ oder zusätzlich können auch die Kondensatorplatten, die ja aufgrund ihres metallischen Charakters gut leiten, besonders wärmespeichernd ausgebildet werden, wobei dann allerdings der Wärmetransfer durch die abgeschiedenen Partikel ggf. beeinträchtigt wird. Letztere Maßnahme eignet sich daher bevorzugt für die positiv geladenen Kondensatorplatten, da die positiv aufgeladenen Partikel sich bei der bei Penny-Entladungen bevorzugten positiven Vorionisierung der Partikel auf den negativen Platten des Kollektors niederschlagen.

Insgesamt sind das wenigstens eine Wärmespeicherelement und der Elektroabscheider bevorzugt derart ineinander verschränkt, dass die axiale Erstreckung des mit dem wenigstens einen Wärmespeicherelement verschränkten Elektroabscheiders geringer ist als die Summe der axialen Erstreckungen eines entsprechend leistungsfähigen separaten Elektroabscheiders und der axialen Erstreckungen ein oder mehrerer entsprechend leistungsfähiger separater Wärmespeicherelemente.

Hierdurch ergibt sich eine effektive Einsparung an Baulänge, so dass die erfindungsgemäße Filteranordnung besonders gut für in Wanddurchbrüchen installierbare dezentrale Raumbelüftungsanlagen mit geringer Wandstärke geeignet ist, wenngleich der Einsatz der Erfindung hierauf nicht beschränkt sein soll.

Der für die erfindungsgemäße Filteranordnung verwendete Elektroabscheider ist bevorzugt als zweistufiger Elektroabscheider mit einem lonisator und einem Kollektor nach dem sog. Penney-Prinzip ausgebildet.

Das wenigstens eine Wärmespeicherelement kann bevorzugt kammartig ausgebildet sein, wobei die einzelnen Zähne des wenigstens einen kammartigen Elements vorzugsweise in die Zwischenräume zwischen den bevorzugt plattenförmigen Kollektorelektroden des Elektroabscheiders hineinragen. Damit wird der Raum zwischen den Kollektorelektroden oder -platten effizient genutzt. Je nach den dielektrischen Eigenschaften der wärmespeichernden Elemente werden die Feldeigenschaften in den verbleibenden Räumen zwischen den Kollektorplatten im Hinblick auf die Partikelabscheidung verbessert bzw. zumindest nicht verschlechtert. Die kammartigen Elemente können in Teilbereichen der Kollektorplatten vorgesehen sein oder sich ebenfalls plattenartig über größere Bereiche zwischen den Kollektorplatten erstrecken, dies stellt auch eine Frage der aerodynamischen Optimierung dar.

Das wenigstens eine Wärmespeicherelement ist bevorzugt im Wesentlichen aus einem Material mit hoher Wärmeleitfähigkeit und hoher Wärmespeicherfähigkeit hergestellt, das vorzugsweise nicht elektrisch leitend ist, insbesondere aus einem Kunststoff- oder einem Keramikmaterial.

Ferner wird im Rahmen der Erfindung eine dezentrale Wohnraumbelüftungsanlage mit einer Filteranordnung wie vorstehend beschrieben vorgeschlagen.

Der Filteranordnung ist bevorzugt wenigstens ein durch eine Steuerung kontrollierter elektrischer Lüfter vor- oder nachgeschaltet, der in einem Normalbetriebsmodus der Wohnraumbelüftungsanlage reversierend betrieben wird, so dass mit dem wenigstens einen Wärmespeichelement bei einer Temperaturdifferenz zwischen Innen- und Außenseite eine Wärmerückgewinnung erzielbar ist.

Bevorzugt ist der Elektroabscheider für eine Filterung primär der in einem Zuluftbetriebsmodus in einen Innenraum einströmenden Luft ausgebildet, und der Elektroabscheider, insbesondere der lonisator, wird bevorzugt lediglich in einem Zuluftbetriebsmodus der Wohnraumbelüftungsanlage mit Spannung versorgt und in einem Abluftbetriebsmodus abgeschaltet.

Hierdurch kann eine signifikante Energieersparnis erzielt werden, da der Elektroabscheider im Vergleich zu einem Dauerbetrieb typischerweise nur noch in 50% der Betriebszeit Energie benötigt, wenn von einem 50%-Anteil der Außenluftförderung ausgegangen wird. Falls die dezentrale Wohnraumbelüftungsanlage in bestimmten Situationen nicht in Betrieb ist - z.B., wenn dies aufgrund des Signals eines Schadstoff- oder CO₂-Sensors aufgrund der Qualität der Innenraumluft nicht erforderlich ist - kann der Elektroabscheider ebenfalls automatisch ausgeschaltet werden.

Vor diesem Hintergrund liegt auch eine mögliche alternative Grundbeschreibung der vorliegenden Erfindung darin, eine lufttechnische Anlage mit wenigstens einem Lüfter mit Reversierbetrieb und einem optionalen Wärmespeicher mit einem Elektroabscheider zu versehen, der lediglich in einer Betriebsrichtung des wenigstens einen Lüfters mit vollständiger Abscheideleistung betrieben wird.

Weiterhin kann in einer Ausführungsform die Steuerung einen periodisch aktivierten und/oder manuell aktivierbaren Reinigungsmodus aufweisen, in dem bei abgeschaltetem Elektroabscheider Luft mit maximaler Leistung nach Außen geblasen wird und somit abgelagerte Stäube soweit möglich entfernt werden.

Alternativ oder zusätzlich kann ein Aktuator (z.B. ein Rüttler oder ein Klopfer) vorgesehen sein, der eine Entfernung abgelagerter Stäube bewirkt oder erleichtert.

In einer bevorzugten Ausführungsform kann die Betriebsspannung des Elektrofilters, einschließlich der Betriebsspannung des Ionisators und die Betriebsspannung des Kollektors, abhängig von verschiedenen Parametern variiert werden, wobei diese Parameter aus der Gruppe der Luftförderrichtung, der Luftdurchsatzleistung, der Betriebsstufe, des Kalenderdatums und der Uhrzeit, der Innentemperatur, der Außentemperatur, der über ein Netzwerk übermittelten standortabhängigen Feinstaubwerte, der Luftfeuchtigkeit, einer Vorgabe für die vorherrschende mittlere Partikelgröße (Land-/Stadtmodus) sowie des Signals eines Partikelsensors und/oder eines Signals eines Staubwiderstandssensors gewählt werden können. Damit ergeben sich vielfältige Möglichkeiten der individuellen Anpassung an die jeweiligen Betriebsbedingungen. Beispielsweise kann die Leistungsaufnahme des Elektrofilters vermindert oder eliminiert werden, wenn der Partikelsensor eine nur geringe Partikelbelastung der Außenluft anzeigt oder dies anhand von Wetterdaten oder aus einem Netzwerk (z.B. Internet) ermittelt werden kann. Ein sog. Staubwiderstandssensor liefert Informationen über den spezifischen Widerstand der zu entfernenden Stäube und erlaubt eine Optimierung der Betriebsparameter des Elektroabscheiders. Ferner kann auch die aktuelle Luftfeuchtigkeit für die Steuerung der Coronaentladung sowie zur Vermeidung von Überschlägen zwischen den Kollektorelektroden bei sehr hohen Luftfeuchtigkeiten herangezogen werden.

Gemäß einem weiteren Aspekt der Erfindung wird zur Lösung der vorgenannten Aufgabe eine Raumbelüftungseinheit - insbesondere eine Raumbelüftungseinheit für eine dezentrale Wohnraumbelüftungsanlage - mit einem Luftkanal vorgeschlagen, der zu einem Einbau in eine Außenwand eines Gebäudes mit einer im Wesentlichen horizontalen Erstreckung ausgebildet ist, wenigstens einem in dem Luftkanal angeordneten reversierbaren Lüftermittel, und wenigstens einem in dem Luftkanal angeordneten Wärmespeicherelement. Diese Raumbelüftungseinheit zeichnet sich dadurch aus, dass in dem Luftkanal außerdem wenigstens ein Elektroabscheider angeordnet ist, der bevorzugt von dem zu reinigenden Luftstrom zwangsdurchströmt wird.

Eine derartige Raumbelüftungseinheit unterscheidet sich von bekannten Raumbelüftungseinheiten für dezentrale Wohnraumbelüftungsanlagen somit durch den zusätzlichen, innerhalb des Luftkanals angeordneten wenigstens einen Elektroabscheider. Um diese Elemente auf der in der Regel durch die Dicke des Mauer- und Wandaufbaus begrenzten Länge des Luftkanals unterzubringen, können die Elemente, insbesondere Wärmespeicherelemente und Elektroabscheider, wie vorstehend beschrieben ineinander verschränkt werden. Sofern eine ausreichende Baulänge zur Verfügung steht, können diese Elemente aber auch hintereinander ohne Verschränkung angeordnet sein.

Die Erfindung wird nachfolgend anhand der in den Zeichnungen dargestellten Ausführungsbeispiele näher erläutert. Es zeigen:
- Figur 1: eine schematische Schnittansicht durch eine erfindungsgemäße dezentrale Wohnraumbelüftungseinheit;
- Figur 2: eine perspektivische schematische Ansicht einer kombinierten Elektroabscheider-/Wärmespeichereinheit;
- Figur 3: eine Explosions-Darstellung von Figur 2;
- Figur 4: eine weitere Darstellung der kombinierten Elektroabscheider- /Wärmespeichereinheit mit einer Detaildarstellung der Luftdurchlassgeometrie, und
- Figur 5: eine Darstellung analog zu Figur 4 mit einer alternativen Luftdurchlassgeometrie.

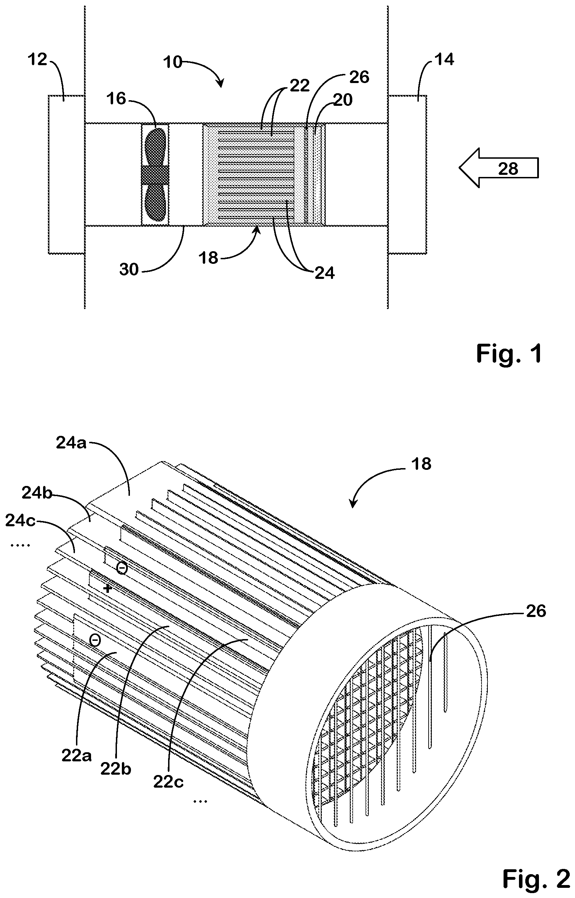

In Figur 1 ist eine insgesamt mit 10 bezeichnete erfindungsgemäße dezentrale Wohnraumbelüftungseinheit dargestellt, die die in Figur 1 rechts befindliche Außenseite eines Gebäudes über eine Außenblende 14 über einen in einem Mauerdurchbruch angeordneten Luftkanal 30 mit einem Innenraum über eine Innenblende 12 verbindet. Ein Luftstrom wird zwangsweise mittels eines reversierbaren Axialventilators 16 erzeugt, so dass in bekannter Weise wahlweise Außenluft 28 nach innen oder Innenluft nach außen befördert werden kann. Dies erfolgt bekanntermaßen jeweils alternierend, bevorzugt im Wechsel mit wenigstens einer weiteren Wohnraumbelüftungseinheit (nicht dargestellt) mit umgekehrter Luftrichtung, wobei beide Wohnraumbelüftungseinheiten über die Innenräume miteinander in Strömungsverbindung stehen. Die entsprechenden elektronischen, in der Regel mikroprozessorgesteuerten Steuereinheiten mit entsprechenden Benutzer-Bedienelementen sind nicht dargestellt. Ein Wärmespeicherelement 24 sorgt für eine Wärmerückgewinnung, indem es sich (sofern es außen kälter ist als innen) durch die abgeführte Innenluft zunächst erwärmt und die gespeicherte Wärme an die von außen zugeführte Zuluft wieder abgegeben wird.

Im Rahmen der vorliegenden Erfindung ist dieses Wärmespeichelement 24 mit einem Elektroabscheider zu einer gemeinsamen Einheit 18 verschränkt. Der Elektroabscheider arbeitet mehrstufig nach dem Penny-Prinzip und besteht aus einem lonisator 26, der durch eine mit positiver Hochspannung beaufschlagte Drahtharfe gebildet wird, und einem in Wirkungsrichtung nachgeschalteten Kollektor, der im Wesentlichen aus alternierend positiv und negativ mit Hochspannung geladenen Kondensatorplatten 24 besteht. Die entsprechenden Hochspannungszuführungen und -Netzteile sind nicht dargestellt. Dem Elektroabscheider ist weiterhin eine mechanische Vorfilterung vorgeschaltet, die mittels einer konventionellen Filtermatte 20 ausgestaltet ist.

Zu Wartungs- und Reinigungszwecken lassen sich die entsprechenden Komponenten aus der Wanddurchführung nach Demontage der Innen- oder Außenblende 12, 14 herausziehen, wobei bevorzugt die Hochspannungsversorgung über nicht dargestellte Kontaktleisten und Stifte automatisch an- und abgekoppelt wird. Weitere Details wie Spannungszuführungen, Befestigungselemente und Hochspannungsnetzteile sind in den Figuren nicht im Einzelnen dargestellt.

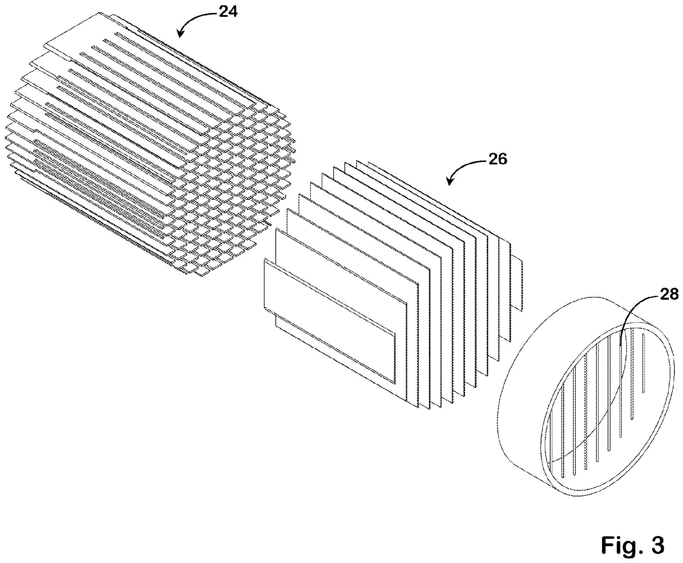

Die Verschränkung zwischen Elektroabscheider und Wärmespeicher ist in den Figuren 2 bis 5 näher dargestellt. Gemäß den Figuren 2 und 3 sind die planaren und jeweils alternierend mit Hochspannung beaufschlagten Elektroden 22a,b,c usw. des Kollektors im Ausführungsbeispiel vertikal angeordnet und in regelmäßigen Abständen von horizontalen kammartigen Wärmespeicherelementen 24a,b,c durchsetzt. Die Elektroden 22a-c sind kürzer als die kammartigen Wärmespeicherelemente 24a-c ausgebildet, so dass die Wärmespeicherelemente im hinteren, vom lonisator 26 abgewandten Bereich die Kollektorelektroden überragen. Je nach den Anforderungen an Kondensatabführung und Partikelspeicherung ist jedoch auch eine um 90° gedrehte Geometrie (vertikale Wärmespeicherelemente und horizontale Kollektorelektroden) bzw. eine um 45° oder einen anderen Winkel gedrehte Geometrie oder auch eine gänzlich andere Verteilung zwischen Elektroden und Wärmespeicherflächen denkbar, einschließlich einer Integration der Wärmespeicherelemente in die Elektroden.

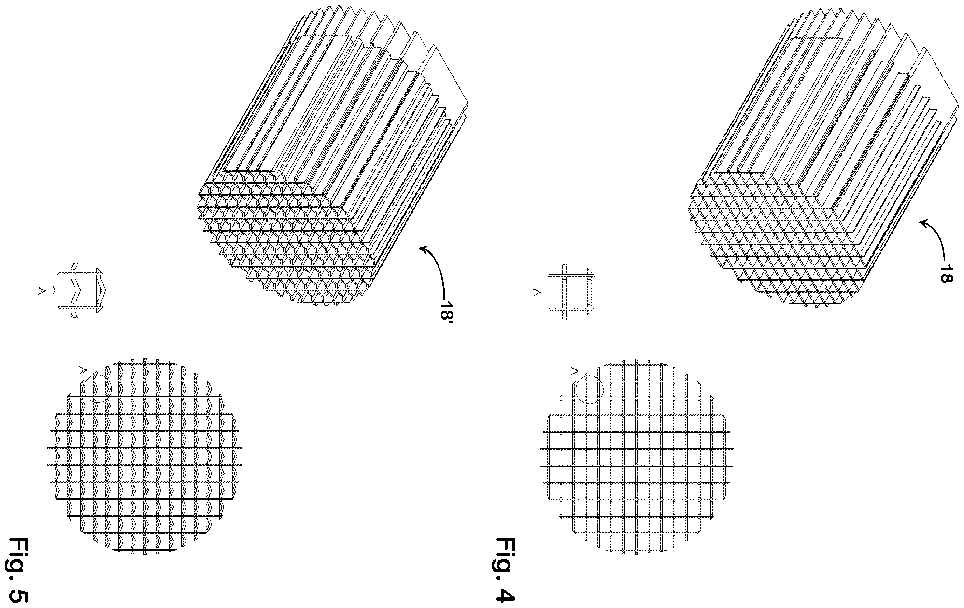

Insgesamt ergibt sich im Ausführungsbeispiel eine kreuzgitterförmige Struktur (vgl. auch Figur 4), die jeweils in etwa quadratische Luftkanäle bereitstellt. Die Wärmespeicherelemente sind aus einem im Wesentlichen nichtleitenden Kunststoff- oder Keramikmaterial mit hoher Wärmekapazität ausgebildet. In einer alternativen Ausführungsform gemäß Figur 5 weist die gemeinsame Einheit 18' aus Wärmespeicherelementen und Elektroabscheider eine derartige Form auf, dass die Luftdurchgänge an ihrer Unterseite (bezogen auf die Montagelage) eine Dachform aufweisen, so dass ein besserer Ablauf evtl. anfallenden Kondensats gewährleistet ist.

In einer alternativen, nicht dargestellten Ausführungsform sind Wärmespeicherelement und der Elektroabscheider linear hintereinander (ggf. durch andere Elemente wie ein Lüfter voneinander getrennt) in einem sich durch einen Mauerdurchgang erstreckenden Luftkanal angeordnet, aber nicht ineinander verschränkt.

## Patentansprüche

1. Filteranordnung für eine lufttechnische Anlage, insbesondere für eine dezentrale Wohnraumbelüftungsanlage, mit einem Luftkanal (30), der einen von dem zu reinigenden Luftstrom zwangsdurchströmten Elektroabscheider aufweist, der sich über einen vorgegebenen Abschnitt des Luftkanals (30) erstreckt,
**dadurch gekennzeichnet, dass**
in dem vorgegebenen Elektroabscheider-Abschnitt (18) des Luftkanals (30) zusätzlich mindestens ein von dem Luftstrom angeströmtes Wärmespeicherelement (24) vorgesehen ist.

2. Filteranordnung nach Anspruch 1,
**dadurch gekennzeichnet, dass**
das wenigstens eine Wärmespeicherelement (24) und der Elektroabscheider derart ineinander verschränkt sind, dass die axiale Erstreckung des mit dem wenigstens einen Wärmespeicherelement verschränkten Elektroabscheiders geringer ist als die Summe der axialen Erstreckungen eines entsprechend leistungsfähigen separaten Elektroabscheiders und der axialen Erstreckungen ein oder mehrerer entsprechend leistungsfähiger separater Wärmespeicherelemente.

3. Filteranordnung nach Anspruch 1 oder 2,
**dadurch gekennzeichnet, dass**
das wenigstens eine Wärmespeicherelement (24) aus einem elektrisch nicht oder elektrisch schlecht leitendem Material gefertigt ist.

4. Filteranordnung nach einem der Ansprüche 1 bis 3,
**dadurch gekennzeichnet, dass**
das Wärmespeichelement oder die Wärmespeicherelemente (24) eine Gesamtmasse aufweisen, die wenigstens so groß ist wie 50%, bevorzugt wenigstens 100%, der Masse der für den Elektroabscheider technisch notwendigen Komponenten.

5. Filteranordnung nach einem der Ansprüche 1 bis 4,
**dadurch gekennzeichnet, dass**
das wenigstens eine Wärmespeicherelement (24) im Wesentlichen aus einem Material mit hoher Wärmeleitfähigkeit und hoher Wärmespeicherfähigkeit hergestellt ist, insbesondere aus einem Kunststoff- oder einem Keramikmaterial.

6. Filteranordnung nach einem der Ansprüche 1 bis 5,
**dadurch gekennzeichnet, dass**
der Elektroabscheider als zweistufiger Elektroabscheider mit einem Ionisator (26) und einem Kollektor (22) ausgebildet ist.

7. Filteranordnung nach einem der Ansprüche 1 bis 6,
**dadurch gekennzeichnet, dass**
das wenigstens eine Wärmespeicherelement (24) kammartig ausgebildet ist, wobei die einzelnen Zähne des wenigstens einen kammartigen Elements vorzugsweise in die Zwischenräume zwischen die Kollektorelektroden (22) des Elektroabscheiders hineinragen.

8. Dezentrale Wohnraumbelüftungsanlage mit einer Filteranordnung nach einem der vorhergehenden Ansprüche,
**dadurch gekennzeichnet, dass**
der Filteranordnung wenigstens ein durch eine Steuerung kontrollierter elektrischer Lüfter (16) vor- oder nachgeschaltet ist, der in einem Normalbetriebsmodus der Wohnraumbelüftungsanlage reversierend betrieben wird, so dass mit dem wenigstens einen Wärmespeichelement (24) bei einer Temperaturdifferenz zwischen Innen- und Außenseite eine Wärmerückgewinnung erzielbar ist.

9. Dezentrale Wohnraumbelüftungsanlage nach Anspruch 8,
**dadurch gekennzeichnet, dass**
der Elektroabscheider für eine Filterung primär der in einem Zuluftbetriebsmodus in einen Innenraum einströmenden Luft ausgebildet ist, und dass der Elektroabscheider, insbesondere der lonisator (26), lediglich in einem Zuluftbetriebsmodus der Wohnraumbelüftungsanlage mit Spannung versorgt wird und in einem Abluftbetriebsmodus abgeschaltet wird.

10. Dezentrale Wohnraumbelüftungsanlage nach Anspruch 8 oder 9,
**dadurch gekennzeichnet, dass**
die Steuerung einen periodisch aktivierten und/oder manuell aktivierbaren Reinigungsmodus aufweist, in dem bei abgeschaltetem Elektroabscheider Luft mit maximaler Leistung nach Außen geblasen wird und/oder, dass ein mechanischer Aktuator zum periodischen Abklopfen abgelagerter Partikel vorgesehen ist.

11. Dezentrale Wohnraumbelüftungsanlage nach einem der Ansprüche 8 bis 10,
**dadurch gekennzeichnet, dass**
die Betriebsspannung des Elektroabscheiders, einschließlich der Betriebsspannung des Ionisators (26) und die Betriebsspannung des Kollektors (22), abhängig von verschiedenen Parametern variiert werden kann, wobei diese Parameter aus der Gruppe der Luftförderrichtung, der Luftdurchsatzleistung, der Betriebsstufe, des Kalenderdatums und der Uhrzeit, der Innentemperatur, der Außentemperatur, der Luftfeuchtigkeit, der über ein Netzwerk übermittelten standortabhängigen Feinstaubwerte, einer Vorgabe für die vorherrschende mittlere Partikelgröße (Land-/Stadtmodus) sowie des Signals eines Staubwiderstandssensors gewählt werden können.

12. Raumbelüftungseinheit, insbesondere für eine dezentrale Wohnraumbelüftungsanlage nach einem der Ansprüche 8 bis 11, mit
- einem Luftkanal (30), der zu einem Einbau in eine Außenwand eines Gebäudes mit einer im Wesentlichen horizontalen Erstreckung ausgebildet ist,
- wenigstens einem in dem Luftkanal (30) angeordneten reversierbaren Lüftermittel (16), und
- wenigstens einem in dem Luftkanal angeordneten Wärmespeicherelement (24),
**dadurch gekennzeichnet, dass**
- in dem Luftkanal (30) außerdem wenigstens ein Elektroabscheider angeordnet ist.

13. Raumbelüftungseinheit nach Anspruch 12,
**dadurch gekennzeichnet, dass**
diese eine Filteranordnung nach einem der Ansprüche 1 bis 7 aufweist.

## Claims

1. A filter assembly for a ventilation system, in particular for a decentralized living space ventilation system, having an air duct (30) which has an electrostatic precipitator through which the airstream which is to be purified is made to flow and which extends over a predefined section of the air duct (30),
**characterized in that**
at least one heat reservoir element (24) against which the airstream flows is additionally provided in the predefined electrostatic precipitator section (18) of the air duct (30).

2. The filter assembly as claimed in claim 1,
**characterized in that**
the at least one heat reservoir element (24) and the electrostatic precipitator are interleaved in one another in such a way that the axial extent of the electrostatic precipitator which is interleaved with the at least one heat reservoir element is smaller than the sum of the axial extents of a correspondingly powerful separate electrostatic precipitator and the axial extents of one or more correspondingly powerful separate heat reservoir elements.

3. The filter assembly as claimed in claim 1 or 2,
**characterized in that**
the at least one heat reservoir element (24) is fabricated from a material which is not electrically conductive or is a poor electrical conductor.

4. The filter assembly as claimed in one of claims 1 to 3,
**characterized in that**
the heat reservoir element or the heat reservoir elements (24) have an overall mass which is at least as large as 50%, preferably at least 100%, of the mass of the components which are technically necessary for the electrostatic precipitator.

5. The filter assembly as claimed in one of claims 1 to 4,
**characterized in that**
the at least one heat reservoir element (24) is manufactured essentially from a material with a high thermal conductance and high heat storage capacity, in particular from a plastic material or a ceramic material.

6. The filter assembly as claimed in one of claims 1 to 5,
**characterized in that**
the electrostatic precipitator is embodied as a two-stage electrostatic precipitator with an ionizer (26) and a collector (22).

7. The filter assembly as claimed in one of claims 1 to 6,
**characterized in that**
the at least one heat reservoir element (24) is embodied in a comb-like fashion, wherein the individual teeth of the at least one comb-like element preferably project into the intermediate spaces between the collector electrodes (22) of the electrostatic precipitator.

8. A decentralized living space ventilation system having a filter assembly as claimed in one of the preceding claims,
**characterized in that**
connected upstream or downstream of the filter assembly is at least one electric fan (16) which is controlled by a controller and which is operated in a reversing fashion in a normal operating mode of the living space ventilation system, with the result that when there is a temperature difference between the inside and the outside heat recovery can be achieved with the at least one heat reservoir element (24).

9. The decentralized living space ventilation system as claimed in claim 8,
**characterized in that**
the electrostatic precipitator is embodied for filtering primarily the air flowing into an interior space in an inflow air operating mode, and **in that** the electrostatic precipitator, in particular the ionizer (26), is supplied with voltage only in an inflow air operating mode of the living space ventilation system and is switched off in an outflow air operating mode.

10. The decentralized living space ventilation system as claimed in claim 8 or 9,
**characterized in that**
the controller has a purification mode which is actuated periodically and/or can be actuated manually and in which, when the electrostatic precipitator is switched off, air is blown outward with a maximum power, and/or **in that** a mechanical actuator is provided for periodically dislodging precipitated particles.

11. The decentralized living space ventilation system as claimed in one of claims 8 to 10,
**characterized in that**
the operating voltage of the electrostatic precipitator, including the operating voltage of the ionizer (26) and the operating voltage of the collector (22), can be varied as a function of various parameters, wherein these parameters can be selected from the group of the air feed direction, the air throughput rate, the operating level, the calendar date and the time, the internal temperature, the external temperature, the air humidity, the location-dependent fine dust values which are transmitted via a network, a predefinition for the prevailing average particle size (country mode/town mode) as well as the signal of a dust resistance sensor.

12. A ventilation unit, in particular for a decentralized living space ventilation system as claimed in one of claims 8 to 11, having
- an air duct (30) which is designed for installation in an external wall of a building with an essentially horizontal extent,
- at least one reversible ventilation means (16) which is arranged in the air duct (30), and
- at least one heat reservoir element (24) which is arranged in the air duct,
**characterized in that**
- at least one electrostatic precipitator is also arranged in the air duct (30).

13. The ventilation unit as claimed in claim 12,
**characterized in that**
it has a filter assembly as claimed in one of claims 1 to 7.

## Revendications

1. Agencement de filtre pour une installation de ventilation, notamment pour une installation de ventilation de pièce habitable décentralisée comportant un conduit d'air (30), qui présente un séparateur électrique traversé par un courant forcé d'air à nettoyer qui s'étend sur une partie déterminée du conduit d'air (30), **caractérisé en ce qu'**au moins un élément de stockage thermique (24) affluant par un courant d'air est prévu en plus dans la partie du séparateur électrique (18) du conduit d'air (30).

2. Agencement de filtre selon la revendication 1, **caractérisé en ce que** l'au moins un élément de stockage thermique (24) et le séparateur électrique sont imbriqués l'un dans l'autre de telle sorte que l'extension axiale du séparateur électrique imbriqué dans l'au moins un élément de stockage thermique est inférieure à la somme des extensions axiales d'un séparateur électrique séparé puissant et des extensions axiales d'un ou de plusieurs éléments de stockage thermiques séparés puissants.

3. Agencement de filtre selon la revendication 1 ou 2, **caractérisé en ce que** l'au moins un élément de stockage thermique (24) est fabriqué à partir d'un matériau peu ou pas conducteur d'électricité.

4. Agencement de filtre selon l'une quelconque des revendications 1 à 3, **caractérisé en ce que** l'élément de stockage thermique ou les éléments de stockage thermiques (24) présentent une masse totale étant d'au moins 50 %, de préférence d'au moins 100 %, de la masse des composants techniquement nécessaires au séparateur électrique.

5. Agencement de filtre selon l'une quelconque des revendications 1 à 4, **caractérisé en ce que** l'au moins un élément de stockage thermique (24) est fabriqué essentiellement à partir d'un matériau à haute conductibilité thermique et à haute capacité d'accumulation thermique, notamment à partir d'une matière plastique ou céramique.

6. Agencement de filtre selon l'une quelconque des revendications 1 à 5, **caractérisé en ce que** le séparateur électrique est constitué comme un séparateur électrique à deux phases avec un ioniseur (26) et un collecteur (22).

7. Agencement de filtre selon l'une quelconque des revendications 1 à 6, **caractérisé en ce que** l'au moins un élément de stockage thermique (24) est en forme de peigne, les différentes dents de l'au moins un élément en forme de peigne faisant saillie de préférence dans les espaces entre les électrodes collectrices (22) du séparateur électrique.

8. Installation de ventilation de pièce habitable décentralisée avec un agencement de filtre selon l'une des revendications précédentes, **caractérisée en ce que** l'agencement de filtre se situe en amont ou en aval d'un ventilateur électrique (16) contrôlé par une commande au fonctionnement réversible de telle sorte qu'une récupération de chaleur peut être obtenue avec l'au moins un élément de stockage thermique (24) avec une différence de température entre l'intérieur et l'extérieur.

9. Installation de ventilation de pièce habitable décentralisée selon la revendication 8, **caractérisée en ce que** le séparateur électrique pour un filtrage est formé principalement comme un air affluant à l'intérieur en mode de fonctionnement d'air entrant et que le séparateur électrique, notamment l'ioniseur (26), est alimenté en tension uniquement en un mode de fonctionnement d'air entrant de l'installation de ventilation de pièce habitable et coupé dans un mode de fonctionnement sortant.

10. Installation de ventilation de pièce habitable décentralisée selon la revendication 8 ou 9, **caractérisée en ce que** la commande présente un mode de nettoyage activé périodiquement et/ou pouvant être activé manuellement dans lequel de l'air est expulsé à l'extérieur à puissance maximale lorsque le séparateur électrique est coupé et/ou qu'un actionneur mécanique est prévu pour frapper périodiquement sur des particules déposées.

11. Installation de ventilation de pièce habitable décentralisée selon l'une quelconque des revendications 8 à 10, **caractérisée en ce que** la tension de service du séparateur électrique, y compris la tension de service de l'ioniseur (26) et la tension de service du collecteur (22), peut être différente en fonction de plusieurs paramètres, lesdits paramètres pouvant être sélectionnés selon les groupes du sens d'alimentation de l'air, de la puissance du flux d'air, du niveau d'exploitation, de la date du calendrier et de l'heure, de la température intérieure, de la température extérieure, de l'humidité de l'air, des valeurs de poussières fines en fonction du lieu transmises par un réseau, d'une condition impérative concernant la taille moyenne des particules prédominante (mode pays/ville) ainsi que selon le signal d'un capteur de résistance à la poussière.

12. Unité d'aération de pièce, notamment pour une installation de ventilation de pièce habitable décentralisée, selon l'une quelconque des revendications 8 à 11, comprenant un conduit d'air (30), qui est formé d'une extension essentiellement horizontale pour un montage dans la paroi extérieure d'un bâtiment, d'au moins une soufflerie (16) disposée de manière réversible dans le conduit d'air (30), et d'au moins un élément de stockage thermique (24) disposé dans le conduit d'air, **caractérisée en ce qu'**au moins un séparateur électrique soit en outre disposé dans le conduit d'air (30).

13. Unité d'aération de pièce selon la revendication 12, **caractérisée en ce que** celle-ci présente un agencement de filtre selon l'une quelconque des revendications 1 à 7.
